# EUROPEAN PATENT APPLICATION

(11) **EP 4 787 999 A1**
(43) Date of publication of application: **05.08.2026**
(21) Application number: 24884592.7
(22) Date of filing: 25.10.2024
(51) Int. Cl.: H04W 72/0446

(54) **TRANSMISSION METHOD AND APPARATUS, NODE DEVICE, AND STORAGE MEDIUM**

(30) Priority: 03.11.2023 CN 202311459879
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN); LI, Han, Beijing 100032 (CN); ZHANG, Dechao, Beijing 100032 (CN)
(74) Representative: Patentgruppen A/S
(86) International application number: PCT/CN2024/127338
(87) International publication number: WO 2025/092589

(57) **Abstract**

Embodiments of the present disclosure provide transmission methods and apparatuses, node devices, and storage media. The method includes: sending a first fgMTN multiframe, the first fgMTN multiframe including a plurality of fgMTN multiplex units; wherein an overhead of each of the plurality of fgMTN multiplex units includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer.

## Description

### CROSS-REFERENCE TO RELATED APPLICATION

This application claims a priority of the Chinese patent application No. 202311459879.1 filed on November 3, 2023, which is incorporated herein by reference in its entirety.

### TECHNICAL FIELD

The present disclosure relates to the field of communication technology, in particular to transmission methods, transmission apparatuses, node devices, and storage media.

### BACKGROUND

With the development of the 5th Generation (5G) mobile communication technology and the increase of vertical industry users, the demand of networks for slicing is enhanced. The industry has conducted many beneficial explorations on Ethernet-based slice isolation technology. Metro Transport Network (MTN) is a new transport network technology system defined by the International Telecommunication Union Telecommunication Standardization Sector (ITU-T) for new service requirements such as 5G. The MTN has a perfect end-to-end Operation, Administration and Maintenance (OAM) mechanism and supports cross-multiplexing of any N×5G channelized client signals.

Previously, both Flexible Ethernet (FlexE) technology and MTN technology supported channel division and slicing only with a minimum granularity of 5 Gbps at a section layer. MTN reuses the frame format of FlexE at the section layer. A basic data unit frame format of the section layer consists of one overhead 64B/66B code block and 20460 payload 64B/66B code blocks.

Slicing provides hard isolation capability based on Time Division Multiplexing (TDM). Integrated service bearer networks will cover a vast range of industries, and many new industries also require isolation through network slicing. With the development of globalization, informatization, and cloudification, the demand for private lines will increase. Private lines with bandwidth above 100 Mbps are developing rapidly, and the demand for private lines with bandwidth below 50 Mbps will also exist for a long time. However, MTN technology supports channel division and slicing only with a minimum granularity of 5 Gbps at the section layer. Therefore, it is necessary to provide an MTN slicing channel with a smaller bandwidth granularity, i.e., a fine grain MTN (fgMTN), above a channel layer of the MTN.

During bandwidth adjustment of an fgMTN channel, upstream and downstream coordination is required for the transfer of adjusted slots. Meanwhile, to ensure consistency of slot configurations between the upstream and the downstream, full slot configurations need to be transferred. In addition, the adjustment also involves transfer of adjustment signaling. How to transfer relevant information within limited overhead resources is a problem to be solved urgently.

### SUMMARY

Embodiments of the present disclosure provide transmission methods and apparatuses, node devices, and storage media, to solve the problem of how to transfer relevant information within limited overhead resources.

According to a first aspect, a transmission method is provided, applied to a first node, the method including:
sending a first fgMTN multiframe, the first fgMTN multiframe including a plurality of fgMTN multiplex units;
wherein an overhead of each of the plurality of fgMTN multiplex units includes an overhead multiframe indicator and client identification information, a value of the overhead multiframe indicator is m, and the client identification information carries a client identifier (ID) corresponding to an (m+1)-th slot, where m is an integer greater than or equal to 0 and less than or equal to N, and N is an integer.

Optionally, instruction information of a first instruction is carried in an overhead of an fgMTN multiplex unit corresponding to a slot for which bandwidth needs to be adjusted, the instruction information of the first instruction being used to indicate a bandwidth adjustment request to a second node.

Optionally, the method further includes:
carrying the instruction information of the first instruction in the overhead of the fgMTN multiplex unit corresponding to the adjusted slot, when the first node prepares to start bandwidth adjustment.

Optionally, when there is a plurality of slots for which bandwidth needs to be adjusted, the instruction information of the first instruction is carried in the overhead of the fgMTN multiplex unit corresponding to each adjusted slot.

Optionally, when an overhead of the first instruction is a first specific value, the instruction information of the first instruction indicates the bandwidth adjustment request to the second node.

Optionally, starting from the first fgMTN multiframe, which is the same fgMTN multiframe corresponding to the instruction information of the first instruction, the client identification information in the overhead of the fgMTN multiplex unit carries the new client ID for adjustment.

Optionally, the client ID of the client identification information in the overhead of an fgMTN multiplex unit corresponding to the removed slot is a second specific value.

Optionally, the method further includes:
receiving a second fgMTN multiframe sent by a second node, the second fgMTN multiframe including a plurality of fgMTN multiplex units;
wherein instruction information of a second instruction is carried in an overhead of an fgMTN multiplex unit corresponding to an adjusted slot, the instruction information of the second instruction indicating the bandwidth adjustment acknowledge of the second node.

Optionally, when there is a plurality of slots for which bandwidth needs to be adjusted, the instruction information of the second instruction is carried in the overhead of the fgMTN multiplex unit corresponding to each adjusted slot.

Optionally, when an overhead of the second instruction is a third specific value, the instruction information of the second instruction indicates the bandwidth adjustment acknowledge of the second node.

Optionally, the method further includes:
sending a third fgMTN multiframe to the second node, the third fgMTN multiframe including a plurality of fgMTN multiplex units;
wherein instruction information of a third instruction is carried in overheads of first Q number of fgMTN multiplex units in the third fgMTN multiframe, the instruction information of the third instruction indicating the bandwidth adjustment commit to the second node, where Q is an integer greater than or equal to 1.

Optionally, the method further includes:
carrying the instruction information of the third instruction in the overheads of the first Q number of fgMTN multiplex units in the third fgMTN multiframe, when the first node is ready to switch to the new slot configurations.

Optionally, when an overhead of the third instruction is a fourth specific value, the instruction information of the third instruction indicates the bandwidth adjustment commit to the second node.

Optionally, the method further includes:
switching to the new slot configurations, starting from an fgMTN multiplex unit subsequent to the first Q number of fgMTN multiplex units, or starting from a first fgMTN multiplex unit of an fgMTN multiframe subsequent to the third fgMTN multiframe.

Optionally, the method further includes:
receiving a fourth fgMTN multiframe from a second node, the fourth fgMTN multiframe including a plurality of fgMTN multiplex units;
wherein instruction information of a fourth instruction is carried in an overhead of an fgMTN multiplex unit corresponding to the slot with the smallest number among all the slots for which bandwidth needs to be adjusted, the instruction information of the fourth instruction indicating a notification for the first node to increase bandwidth.

Optionally, when an overhead of the fourth instruction is a fifth specific value, the instruction information of the fourth instruction indicates the notification for the first node to increase bandwidth.

According to a second aspect, a transmission method is provided, applied to a second node, the method including:
receiving a first fgMTN multiframe, the first fgMTN multiframe including a plurality of fgMTN multiplex units, wherein an overhead of each of the plurality of fgMTN multiplex units includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer.

Optionally, instruction information of a first instruction is carried in an overhead of an fgMTN multiplex unit corresponding to a slot for which bandwidth needs to be adjusted, the instruction information of the first instruction being used to indicate a bandwidth adjustment request to a second node.

Optionally, when there is a plurality of slots for which bandwidth needs to be adjusted, the instruction information of the first instruction is carried in the overhead of the fgMTN multiplex unit corresponding to each adjusted slot.

Optionally, when an overhead of the first instruction is a first specific value, the instruction information of the first instruction indicates the bandwidth adjustment request to a second node.

Optionally, starting from the first fgMTN multiframe, which is the same fgMTN multiframe corresponding to the instruction information of the first instruction, the client identification information in the overhead of the fgMTN multiplex unit carries the new client ID for adjustment.

Optionally, the client ID of the client identification information in the overhead of an fgMTN multiplex unit corresponding to the removed slot is a second specific value.

Optionally, the method further includes:
sending a second fgMTN multiframe to a first node, the second fgMTN multiframe including a plurality of fgMTN multiplex units;
wherein instruction information of a second instruction is carried in an overhead of an fgMTN multiplex unit corresponding to an adjusted slot, the instruction information of the second instruction indicating the bandwidth adjustment acknowledge of the second node.

Optionally, the method further includes:
carrying the instruction information of the second instruction in the overhead of the fgMTN multiplex unit corresponding to the adjusted slot, when the second node is ready to switch to the new slot configurations.

Optionally, when there is a plurality of slots for which bandwidth needs to be adjusted, the instruction information of the second instruction is carried in the overhead of the fgMTN multiplex unit corresponding to each adjusted slot.

Optionally, when an overhead of the second instruction is a third specific value, the instruction information of the second instruction indicates the bandwidth adjustment acknowledge of the second node.

Optionally, the method further includes:
receiving a third fgMTN multiframe from a first node, the third fgMTN multiframe including a plurality of fgMTN multiplex units;
wherein instruction information of a third instruction is carried in overheads of first Q number of fgMTN multiplex units in the third fgMTN multiframe, the instruction information of the third instruction indicating the bandwidth adjustment commit to the second node, where Q is an integer greater than or equal to 1.

Optionally, when the second node receives at least one piece of instruction information of the third instruction, the second node switches to the new slot configurations starting from a first fgMTN multiplex unit of an fgMTN multiframe subsequent to the third fgMTN multiframe.

Optionally, when an overhead of the third instruction is a third specific value, the instruction information of the third instruction indicates the bandwidth adjustment commit to the second node.

According to a third aspect, a transmission apparatus is provided, applied to a first node, the transmission apparatus including:
a first sending module, configured to send a first fgMTN multiframe to a second node, the first fgMTN multiframe including a plurality of fgMTN multiplex units;
wherein each of the plurality of fgMTN multiplex units includes an overhead multiframe indicator and a client identification field, a value of the overhead multiframe indicator is m, and the client identification field carries a client identifier corresponding to an (m+1)-th slot, where m is an integer greater than or equal to 0 and less than or equal to N, and N is an integer.

According to a fourth aspect, a transmission apparatus is provided, applied to a second node, the transmission apparatus including:
a third receiving module, configured to receive a first fgMTN multiframe, the first fgMTN multiframe including a plurality of fgMTN multiplex units, wherein each of the plurality of fgMTN multiplex units includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer.

According to a fifth aspect, a node device is provided, including a processor, a memory, and a program or instructions stored on the memory and executable on the processor, wherein the program or instructions, when executed by the processor, implement the steps of the method according to the first aspect or the second aspect.

According to a sixth aspect, a readable storage medium is provided, having a program or instructions stored thereon, wherein the program or instructions, when executed by a processor, implement the steps of the method according to the first aspect or the second aspect.

In the present disclosure, an overhead of an fgMTN multiplex unit includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer. By improving the slot transfer and adjustment processing flow of the overhead of the fgMTN multiplex unit, efficient transfer and adjustment can be performed by relying on the same fields in the overhead, whether during normal transmission or during slot adjustment.

### BRIEF DESCRIPTION OF THE DRAWINGS

Various other advantages and benefits will become apparent to those of ordinary skill in the art by reading the detailed description of the following preferred embodiments. The drawings are only for the purpose of illustrating the preferred embodiments and are not considered as a limitation on the present disclosure. Moreover, throughout the drawings, the same reference symbols denote the same components. In the drawings:
FIG. 1 is a first flowchart of a transmission method provided in an embodiment of the present disclosure;
FIG. 2 is a second flowchart of a transmission method provided in an embodiment of the present disclosure;
FIG. 3 is a schematic diagram of an fgMTN multiplex unit provided in an embodiment of the present disclosure;
FIG. 4 is a flowchart between adjacent nodes during bandwidth reduction provided in an embodiment of the present disclosure;
FIG. 5 is a flowchart between adjacent nodes during bandwidth increase provided in an embodiment of the present disclosure;
FIG. 6 is a first schematic diagram of a transmission apparatus provided in an embodiment of the present disclosure;
FIG. 7 is a second schematic diagram of a transmission apparatus provided in an embodiment of the present disclosure;
FIG. 8 is a schematic diagram of a node device provided in an embodiment of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

In the specification and claims of the present disclosure, the term "comprise/include" and any variants thereof are intended to cover a non-exclusive inclusion. For example, a process, method, system, product, or device including a series of steps or units is not necessarily limited to those steps or units clearly listed, but may include other steps or units not clearly listed or inherent to such a process, method, product, or device. In addition, "and/or" used in the specification and claims represents at least one of the connected objects. For example, "A and/or B" represents three cases: A alone, B alone, and both A and B exist.

In the embodiments of the present disclosure, words such as "exemplary" or "for example" are used to represent an example, an illustration, or an explanation. Any embodiment or design scheme described as "exemplary" or "for example" in the embodiments of the present disclosure should not be interpreted as being more preferred or advantageous than other embodiments or design schemes. To be precise, the use of words such as "exemplary" or "for example" is intended to present relevant concepts in a specific manner.

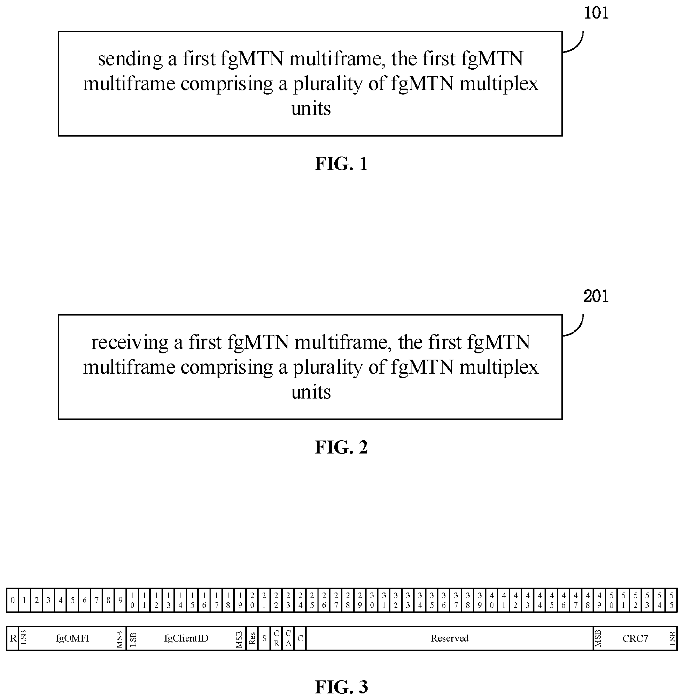

Referring to FIG. 1, an embodiment of the present disclosure provides a transmission method, performed by a first node, and specific steps include: Step 101.

Step 101: Send a first fgMTN multiframe to a second node, the first fgMTN multiframe including a plurality of fgMTN multiplex units.

An overhead of each fgMTN multiplex unit includes an overhead multiframe indicator and a client identification field, a value of the overhead multiframe indicator is m, and the client identification field carries a client ID corresponding to an (m+1)-th slot, where m is an integer greater than or equal to 0 and less than or equal to N, and N is an integer.

The fgMTN multiframe group in the present disclosure may also be referred to as an fgMTN multiframe.

The first node may also be referred to as an upstream node, a source transmitting node, or Node A. The second node may also be referred to as a downstream node, a receiving node, a receiving-direction node, or Node B. In one embodiment of the present disclosure, values of the overhead multiframe indicator (Overhead MultiFrame Indicator, OMFI) in the plurality of fgMTN multiplex units are sequentially from 0 to N and then cycle. An fgMTN multiplex unit corresponding to an OMFI value carries a client ID overhead of a corresponding slot. The overhead of each fgMTN multiplex unit carries one client ID. When the overhead of an fgMTN multiplex unit carries an OMFI value of 0, the client ID field of the fgMTN multiplex unit carries a client ID corresponding to a first slot. When the overhead of the fgMTN multiplex unit carries an OMFI value of m, the client ID field of the fgMTN multiplex unit carries a client ID corresponding to an (m+1)-th slot. In this way, through the overheads of N+1 fgMTN multiplex units with OMFI values from 0 to N, the client IDs corresponding to all N+1 slots can be completed.

Specifically, for a Metro Transport Network (Metro Transport Network, MTN) 5 Gbps channel, 480 fine-grained slot channels can be divided, and the OMFI is sent and cycled from 0 to 479. For example, each group of fgMTN multiplex units with OMFI from 0 to 479 forms one fgMTN multiframe.

In one embodiment of the present disclosure, instruction information of a first instruction (which may also be referred to as a bandwidth adjustment request instruction) is carried in an overhead of an fgMTN multiplex unit corresponding to a slot for which bandwidth needs to be adjusted, the instruction information of the first instruction being used to indicate a bandwidth adjustment request to the second node.

It should be noted that the slot for which bandwidth needs to be adjusted includes a slot whose occupancy needs to be removed or a slot for which bandwidth needs to be increased and adjusted.

In one embodiment of the present disclosure, the method further includes: carrying the instruction information of the first instruction in the overhead of the fgMTN multiplex unit corresponding to the slot for which bandwidth needs to be adjusted, when the first node prepares to start bandwidth adjustment.

In one embodiment of the present disclosure, when there is a plurality of slots for which bandwidth needs to be adjusted, the instruction information of the first instruction is carried in the overhead of the fgMTN multiplex unit corresponding to each adjusted slot.

In one embodiment of the present disclosure, when an overhead of the first instruction is a first specific value, the instruction information of the first instruction indicates the bandwidth adjustment request to the second node.

Optionally, the first specific value may be 1, but is not limited thereto.

For example, the case where the overhead of the first instruction is the first specific value may include that the overhead of the first instruction is set to 1. That is, when the overhead of the first instruction is set to 1, the instruction information of the first instruction indicates the bandwidth adjustment request to the second node.

For another example, the case where the overhead of the first instruction is the first specific value may include that the overhead of the first instruction changes from a specific value to the first specific value (i.e., the overhead of the first instruction is inverted relative to a previous value), such as from 0 to 1 or from 1 to 0. In this case, the instruction information of the first instruction indicates the bandwidth adjustment request to the second node.

In one embodiment of the present disclosure, starting from the first fgMTN multiframe, which is the same fgMTN multiframe corresponding to the instruction information of the first instruction, the client identification information in the overhead of the fgMTN multiplex unit carries a new client ID for adjustment.

In one embodiment of the present disclosure, in a case where occupancy of a slot needs to be removed due to bandwidth reduction, a client ID carried in the client identification information in the overhead of an fgMTN multiplex unit corresponding to the removed slot is a second specific value.

Optionally, the second specific value may be 0, but is not limited thereto.

For example, for a slot that needs to be removed due to bandwidth reduction, the client identification information in the overhead of the corresponding fgMTN multiplex unit is filled with all 0s (indicating not being occupied).

In one embodiment of the present disclosure, the method further includes: receiving a second fgMTN multiframe sent by the second node, the second fgMTN multiframe including a plurality of fgMTN multiplex units; wherein instruction information of a second instruction (which may also be referred to as a bandwidth adjustment acknowledge instruction) is carried in an overhead of an fgMTN multiplex unit corresponding to an adjusted slot, the instruction information of the second instruction indicating the bandwidth adjustment acknowledge of the second node.

In one embodiment of the present disclosure, when there is a plurality of slots for which bandwidth needs to be adjusted, the instruction information of the second instruction is carried in the overhead of the fgMTN multiplex unit corresponding to each adjusted slot.

In one embodiment of the present disclosure, when an overhead of the second instruction is a third specific value, the instruction information of the second instruction indicates the bandwidth adjustment acknowledge of the second node.

Optionally, the third specific value may be 1, but is not limited thereto.

For example, the case where the overhead of the second instruction is the third specific value may include that the overhead of the second instruction is set to 1. That is, when the overhead of the second instruction is set to 1, the instruction information of the second instruction indicates the bandwidth adjustment acknowledge of the second node.

For another example, the case where the overhead of the second instruction is the third specific value may include that the overhead of the second instruction changes from a specific value to the third specific value (i.e., the overhead of the second instruction is inverted relative to a previous value), such as from 0 to 1 or from 1 to 0. In this case, the instruction information of the second instruction indicates the bandwidth adjustment acknowledge of the second node.

In one embodiment of the present disclosure, the method further includes: sending a third fgMTN multiframe to the second node, the third fgMTN multiframe including a plurality of fgMTN multiplex units; wherein instruction information of a third instruction (which may also be referred to as a bandwidth adjustment commit instruction) is carried in overheads of first Q number of fgMTN multiplex units in the third fgMTN multiframe, the instruction information of the third instruction indicating the bandwidth adjustment commit to the second node, where Q is an integer greater than or equal to 1.

Optionally, Q may be 3, but is not limited thereto.

In one embodiment of the present disclosure, the method further includes: carrying the instruction information of the third instruction in the overheads of the first Q number of fgMTN multiplex units in the third fgMTN multiframe, when the first node is ready to switch to the new slot configurations.

In one embodiment of the present disclosure, when an overhead of the third instruction is a fourth specific value, the instruction information of the third instruction indicates the bandwidth adjustment commit to the second node.

Optionally, the fourth specific value may be 1, but is not limited thereto.

For example, the case where the overhead of the third instruction is the fourth specific value may include that the overhead of the third instruction is set to 1. That is, when the overhead of the third instruction is set to 1, the instruction information of the third instruction indicates the bandwidth adjustment commit to the second node.

For another example, the case where the overhead of the third instruction is the fourth specific value may include that the overhead of the third instruction changes from a specific value to the fourth specific value (i.e., the overhead of the third instruction is inverted relative to a previous value), such as from 0 to 1 or from 1 to 0. In this case, the instruction information of the third instruction indicates the bandwidth adjustment commit to the second node.

For example, the overhead of the third instruction is 0 by default. When the overhead of the third instruction is set to 1, the instruction information of the third instruction indicates the bandwidth adjustment commit to the second node.

In one embodiment of the present disclosure, the method further includes: switching to the new slot configurations, starting from an fgMTN multiplex unit subsequent to the first Q number of fgMTN multiplex units, or starting from a first fgMTN multiplex unit of an fgMTN multiframe subsequent to the third fgMTN multiframe.

In one embodiment of the present disclosure, the method further includes: receiving a fourth fgMTN multiframe from the second node, the fourth fgMTN multiframe including a plurality of fgMTN multiplex units; wherein instruction information of a fourth instruction (which may also be referred to as a bandwidth increase notification instruction) is carried in an overhead of an fgMTN multiplex unit corresponding to a slot with a smallest slot number among a plurality of slots for which bandwidth needs to be adjusted (e.g., bandwidth needs to be increased), the instruction information of the fourth instruction indicating a notification for the first node to increase bandwidth.

In one embodiment of the present disclosure, when an overhead of the fourth instruction is a fifth specific value, the instruction information of the fourth instruction indicates the notification for the first node to increase bandwidth.

Optionally, the fifth specific value may be 1, but is not limited thereto.

For example, the case where the overhead of the fourth instruction is the fifth specific value may include that the overhead of the fourth instruction is set to 1. That is, when the overhead of the fourth instruction is set to 1, the instruction information of the fourth instruction indicates the notification for the first node to increase bandwidth.

For another example, the case where the overhead of the fourth instruction is the fifth specific value may include that the overhead of the fourth instruction changes from a specific value to the fifth specific value (i.e., the overhead of the fourth instruction is inverted relative to a previous value), such as from 0 to 1 or from 1 to 0. In this case, the instruction information of the fourth instruction indicates the notification for the first node to increase bandwidth.

It should be noted that a timing relationship among the first fgMTN multiframe, the second fgMTN multiframe, the third fgMTN multiframe, and the fourth fgMTN multiframe is not specifically limited in the present disclosure. The following describes the timing relationship among the multiframes using two scenarios as optional ways.

Scenario 1: Bandwidth reduction scenario. The first node sends a first fgMTN multiframe to the second node, then the second node sends a second fgMTN multiframe to the first node, and then the first node sends a third fgMTN multiframe to the second node.

Scenario 2: Bandwidth increase scenario. The second node sends a fourth fgMTN multiframe to the first node, then the first node sends a first fgMTN multiframe to the second node, then the second node sends a second fgMTN multiframe to the first node, and then the first node sends a third fgMTN multiframe to the second node.

In the present disclosure, an overhead of an fgMTN multiplex unit includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer. By improving the slot transfer and adjustment processing flow of the overhead of the fgMTN multiplex unit, efficient transfer and adjustment can be performed by relying on the same fields in the overhead, whether during normal transmission or during slot adjustment.

Referring to FIG. 2, an embodiment of the present disclosure provides a transmission method, performed by a second node, and specific steps include: Step 201.

Step 201: Receive a first fgMTN multiframe, the first fgMTN multiframe including a plurality of fgMTN multiplex units, the fgMTN multiplex unit including an overhead multiframe indicator and client identification information, a value of the overhead multiframe indicator being m, and the client identification information carrying a client ID corresponding to an (m+1)-th slot, where m is an integer greater than or equal to 0 and less than or equal to N, and N is an integer.

In an embodiment of the present disclosure, instruction information of a first instruction is carried in an overhead of an fgMTN multiplex unit corresponding to a slot for which bandwidth needs to be adjusted, the instruction information of the first instruction being used to indicate a bandwidth adjustment request to a second node. It should be noted that the slot for which bandwidth needs to be adjusted includes a slot whose occupancy needs to be removed or a slot for which bandwidth needs to be increased and adjusted.

In an embodiment of the present disclosure, when there is a plurality of slots for which bandwidth needs to be adjusted, the instruction information of the first instruction is carried in the overhead of the fgMTN multiplex unit corresponding to each adjusted slot.

In an embodiment of the present disclosure, in a case where an overhead of the first instruction is a first specific value, the instruction information of the first instruction indicates the bandwidth adjustment request to the second node.

In an embodiment of the present disclosure, starting from the first fgMTN multiframe corresponding to the instruction information of the first instruction, the client identification information in the overhead of the fgMTN multiplex unit carries a new client ID for adjustment.

In an embodiment of the present disclosure, in a case where occupancy of a slot needs to be removed due to bandwidth reduction, a client ID carried in the client identification information in the overhead of an fgMTN multiplex unit corresponding to the removed slot is a second specific value.

Optionally, the second specific value may be 0, but is not limited thereto.

In an embodiment of the present disclosure, the method further includes:
sending a second fgMTN multiframe to a first node, the second fgMTN multiframe including a plurality of fgMTN multiplex units;
wherein instruction information of a second instruction is carried in an overhead of an fgMTN multiplex unit corresponding to an adjusted slot, the instruction information of the second instruction being used to indicate that the second node acknowledges the bandwidth adjustment (bandwidth adjustment acknowledge).

In an embodiment of the present disclosure, the method further includes:
carrying the instruction information of the second instruction in the overhead of the fgMTN multiplex unit corresponding to the adjusted slot, when the second node is ready to switch to new slot configurations.

In an embodiment of the present disclosure, when there is a plurality of slots for which bandwidth needs to be adjusted, the instruction information of the second instruction is carried in the overhead of the fgMTN multiplex unit corresponding to each adjusted slot.

Optionally, a third specific value may be 1, but is not limited thereto.

In an embodiment of the present disclosure, in a case where an overhead of the second instruction is the third specific value, the instruction information of the second instruction indicates the bandwidth adjustment acknowledge of the second node.

In an embodiment of the present disclosure, the method further includes:
receiving a third fgMTN multiframe from the first node, the third fgMTN multiframe including a plurality of fgMTN multiplex units;
wherein instruction information of a third instruction is carried in overheads of first Q number of fgMTN multiplex units in the third fgMTN multiframe, the instruction information of the third instruction indicating a bandwidth adjustment commit to the second node, where Q is an integer greater than or equal to 1.

In an embodiment of the present disclosure, the method further includes: in a case where the second node receives at least one piece of instruction information of the third instruction, switching to the new slot configurations starting from a first fgMTN multiplex unit of an fgMTN multiframe subsequent to the third fgMTN multiframe.

In an embodiment of the present disclosure, in a case where an overhead of the third instruction is a fourth specific value, the instruction information of the third instruction indicates the bandwidth adjustment commit to the second node.

Optionally, the fourth specific value may be 1, but is not limited thereto.

In the present disclosure, an overhead of an fgMTN multiplex unit includes an overhead multiframe indicator and client identification information, a value of the overhead multiframe indicator is m, and the client identification information carries a client ID corresponding to an (m+1)-th slot, where m is an integer greater than or equal to 0 and less than or equal to N, and N is an integer. By improving the slot transfer and adjustment processing flow of the overhead of the fgMTN multiplex unit, efficient transfer and adjustment can be performed by relying on the same fields in the overhead, whether during normal transmission or during slot adjustment.

Referring to FIG. 3, the overhead of the fgMTN multiplex unit in the present disclosure may include at least one of the following: instruction information of a first instruction (bandwidth adjustment request), instruction information of a second instruction (bandwidth adjustment acknowledge), instruction information of a third instruction (bandwidth adjustment commit), and instruction information of a fourth instruction (bandwidth increase notification).

In FIG. 3, "CR" represents the first instruction, "CA" represents the second instruction, "C" represents the third instruction, and "S" represents the fourth instruction. In the figure, "fgOMFI" represents the overhead multiframe indicator, and "fgClientID" represents the client identification.

Optionally, if the overhead of the first instruction is set to 1, the instruction information of the first instruction indicates a request for bandwidth adjustment (e.g., requesting the second node to start bandwidth adjustment). If the overhead of the second instruction is set to 1, the instruction information of the second instruction indicates the bandwidth adjustment acknowledge. If the overhead of the third instruction is set to 1, the instruction information of the third instruction indicates the bandwidth adjustment commit. If the overhead of the fourth instruction is set to 1, the instruction information of the fourth instruction indicates a notification for increasing bandwidth (e.g., notifying the first node to start bandwidth increase adjustment).

It can be understood that default values of the overheads of the first instruction, the second instruction, the third instruction, and the fourth instruction may be 0. If the overhead of the first instruction, the second instruction, the third instruction, or the fourth instruction is 0, it indicates that the corresponding instruction information is null, or the corresponding instruction information is invalid.

In the present disclosure, for each slot, the fgMTN multiplex unit corresponding to its OMFI value has the overheads of the first instruction and the second instruction for that slot. When the overhead of an fgMTN multiplex unit carries an OMFI value of 0, the first instruction and the second instruction in the overhead of this fgMTN multiplex unit correspond to the instruction information of the first slot. When the overhead of an fgMTN multiplex unit carries an OMFI value of m, the first instruction and/or the second instruction in the overhead of this fgMTN multiplex unit correspond to the instruction information of the (m+1)-th slot.

In the present disclosure, when slot bandwidth needs to be adjusted, the instruction information of the first instruction and the second instruction is only carried in the overhead of the fgMTN multiplex unit corresponding to the slot involved in the adjustment.

Exemplarily, fgMTN bandwidth adjustment (increase or decrease) involves slot bandwidth adjustment (increase corresponds to adding slot(s), and decrease corresponds to deleting slot(s)).

For example, when the bandwidth is decreased, if slot 4 and slot 6 are no longer used, the instruction information of the first instruction and the second instruction is only carried in the overheads of the fgMTN multiplex units corresponding to OMFI=3 and OMFI=5. For instance, the overheads of the first instruction and the second instruction are both changed from the default value of 0 to 1.

For another example, when the bandwidth is increased, if slot 4 and slot 6 are added for use, the instruction information of the first instruction and the second instruction is only carried in the overheads of the fgMTN multiplex units corresponding to OMFI=3 and OMFI=5. For instance, the overheads of the first instruction and the second instruction are both changed from the default value of 0 to 1.

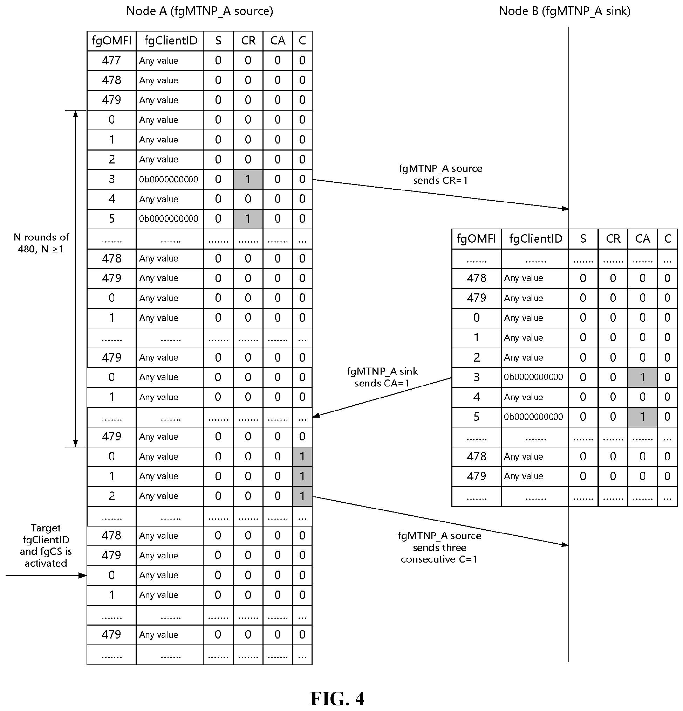

The procedure between adjacent nodes when the bandwidth is decreased is described below in conjunction with FIG. 4. Specifically, the steps are as follows.
(1) The first node (Node A) sets the overhead of a first instruction (also referred to as a bandwidth adjustment request instruction) to 1 in the overhead of an fgMTN multiplex unit corresponding to a slot to be removed from occupancy in a first fgMTN multiframe, to request the second node to start bandwidth adjustment, and sends the first fgMTN multiframe to the second node.
   Starting from the first fgMTN multiframe, the client ID carried in the overhead of the fgMTN multiplex unit is already the new client ID information for adjustment. Due to the bandwidth reduction, the client identification information carried in the overhead of the fgMTN multiplex unit corresponding to the slot to be removed from occupancy is filled with all zeros (indicating that the slot is not occupied).
(2) The second node (Node B) receives the first instruction from the first node. When the second node is ready to switch to a new slot configuration, the second node sets the overhead of a second instruction to 1 in the overhead of the fgMTN multiplex unit corresponding to the slot to be removed from occupancy, and sends a second fgMTN multiframe to the first node.
(3) The first node receives the second instruction (also referred to as a bandwidth adjustment acknowledge instruction) from the second node. When the first node is ready to switch to the new slot configuration, the first node sets the third instruction (also referred to as a bandwidth adjustment commit instruction) in the overheads of the first three fgMTN multiplex units of a third fgMTN multiframe to 1, and sends the third fgMTN multiframe to the second node. The first node switches to the new slot configuration starting from an fgMTN multiplex unit subsequent to the first Q fgMTN multiplex units, or starting from the first fgMTN multiplex unit of the next fgMTN multiframe.
(4) After receiving at least one third instruction (also referred to as a bandwidth adjustment commit instruction) with a value of 1, the second node switches to the new slot configuration starting from the first fgMTN multiplex unit of an fgMTN multiframe subsequent to the third fgMTN multiframe.

Referring to FIG. 4, when the bandwidth is decreased, slot 4 and slot 6 are no longer used. The interaction flowchart (overhead) between the first node and the second node is as shown in the figure (where the first instruction is CR in the figure, the second instruction is CA in the figure, and the third instruction is C in the figure).

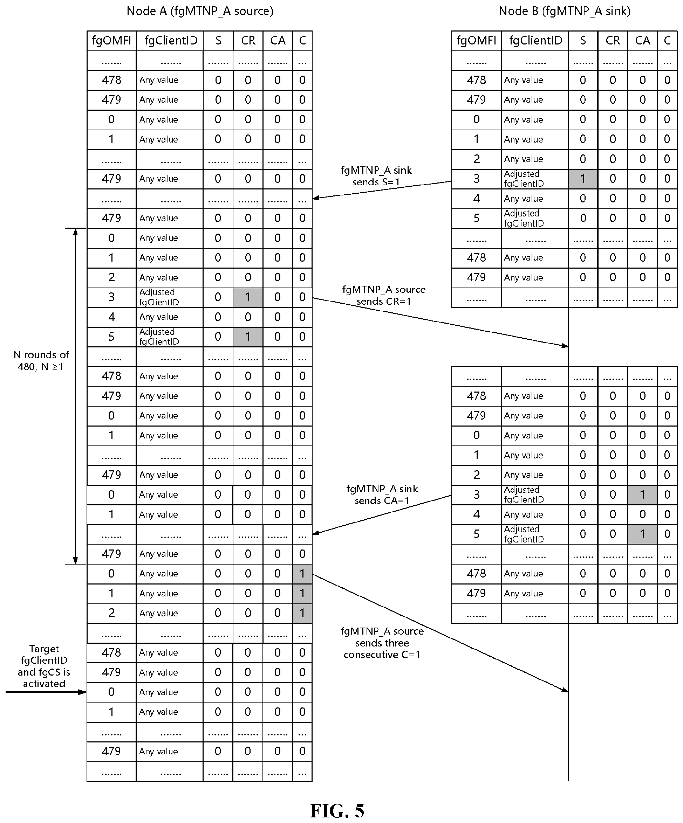

The following describes the flow between adjacent nodes when the bandwidth is increased with reference to FIG. 5, and specific steps are as follows.
(1) The second node (Node B) sets an overhead of a fourth instruction (or referred to as a bandwidth increase notification instruction) in an overhead of an fgMTN multiplex unit corresponding to a smallest slot number among slots to be increased to 1, to notify the first node to start bandwidth increase adjustment, and sends a fourth fgMTN multiframe to the first node.
(2) The first node (Node A) receives the fourth instruction from the second node. When the first node prepares to start bandwidth adjustment, the first node sets an overhead of a first instruction (or referred to as a bandwidth adjustment request instruction) corresponding to a slot for which increase adjustment is required to 1, to request the second node to start bandwidth adjustment, and sends a first fgMTN multiframe to the second node.
   Starting from the first fgMTN multiframe corresponding to the overhead, a client ID carried in the overhead of the fgMTN multiplex unit is already a new client ID for adjustment.
(3) The second node receives the second instruction (bandwidth adjustment request instruction) from the first node. When the second node is ready to switch to new slot configurations, the second node sets an overhead of a third instruction (or referred to as a bandwidth adjustment acknowledge instruction) in the overhead of the fgMTN multiplex unit corresponding to the slot for which increase adjustment is required to 1, and sends a second fgMTN multiframe to the first node.
(4) The first node receives the second instruction (bandwidth adjustment acknowledge instruction) from the second node. When the first node is ready to switch to the new slot configurations, the first node sets the third instruction in overheads of first three fgMTN multiplex units of a third fgMTN multiframe to 1, and sends the third fgMTN multiframe to the second node. The first node switches to the new slot configurations starting from a first fgMTN multiplex unit of a next fgMTN multiframe.
(5) After receiving at least one third instruction with a value of 1, the second node switches to the new slot configurations starting from a first fgMTN multiplex unit of an fgMTN multiframe subsequent to the seventh fgMTN multiframe.

Referring to FIG. 5, when the bandwidth is increased, slot 4 and slot 6 are increased and used, and the interaction flowchart (overheads) between the adjacent nodes is as follows (the fourth instruction is S in the figure, the first instruction is CR in the figure, the second instruction is CA in the figure, and the third instruction is C in the figure).

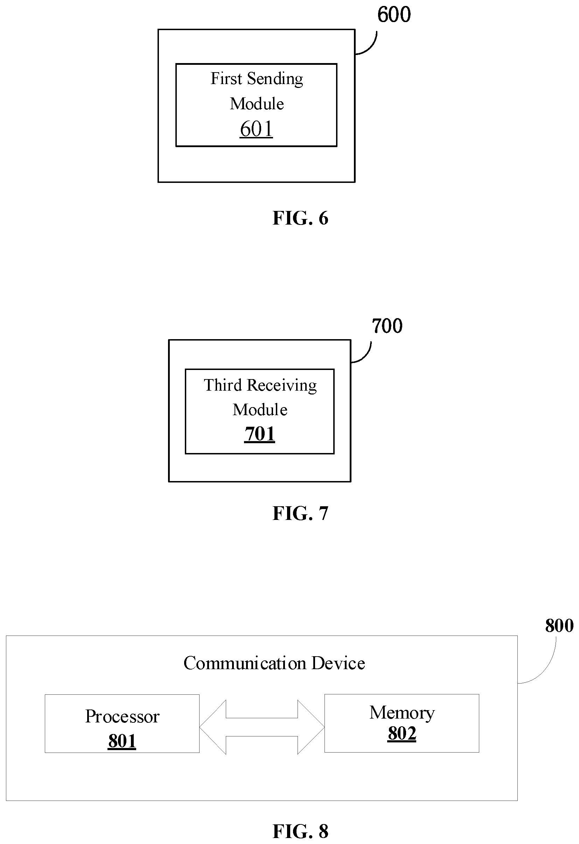

Referring to FIG. 6, an embodiment of the present disclosure provides a transmission apparatus, applied to a first node. The apparatus 600 includes:
a first sending module 601, configured to send a first fgMTN multiframe to a second node, the first fgMTN multiframe including a plurality of fgMTN multiplex units;
wherein an overhead of each fgMTN multiplex unit includes an overhead multiframe indicator and a client identification field, a value of the overhead multiframe indicator is m, and the client identification field carries a client identifier (client ID) corresponding to an (m+1)-th slot, where m is an integer greater than or equal to 0 and less than or equal to N, and N is an integer.

In an embodiment of the present disclosure, instruction information of a first instruction is carried in an overhead of an fgMTN multiplex unit corresponding to a slot for which bandwidth needs to be adjusted, the instruction information of the first instruction being used to indicate a bandwidth adjustment request to the second node.

It should be noted that the slot for which bandwidth needs to be adjusted includes a slot whose occupancy needs to be removed or a slot for which bandwidth needs to be increased and adjusted.

In an embodiment of the present disclosure, the apparatus further includes:
a first processing module, configured to carry the instruction information of the first instruction in the overhead of the fgMTN multiplex unit corresponding to the slot for which bandwidth needs to be adjusted, when the first node prepares to start bandwidth adjustment.

In an embodiment of the present disclosure, when there is a plurality of slots for which bandwidth needs to be adjusted, the instruction information of the first instruction is carried in the overhead of the fgMTN multiplex unit corresponding to each adjusted slot.

In an embodiment of the present disclosure, when an overhead of the first instruction is a first specific value, the instruction information of the first instruction indicates the bandwidth adjustment request to the second node.

In an embodiment of the present disclosure, starting from the first fgMTN multiframe, which is the same fgMTN multiframe corresponding to the instruction information of the first instruction, the client identification information in the overhead of the fgMTN multiplex unit carries a new client ID for adjustment.

In an embodiment of the present disclosure, in a case where occupancy of a slot needs to be removed due to bandwidth reduction, a client ID carried in the client identification information in the overhead of an fgMTN multiplex unit corresponding to the removed slot is a second specific value.

For example, for a slot that needs to be removed due to bandwidth reduction, the client identification information in the overhead of the corresponding fgMTN multiplex unit is filled with all 0s (indicating not being occupied).

In an embodiment of the present disclosure, the apparatus further includes:
a first receiving module, configured to receive a second fgMTN multiframe sent by the second node, the second fgMTN multiframe including a plurality of fgMTN multiplex units;
wherein instruction information of a second instruction (or referred to as a bandwidth adjustment acknowledge instruction) is carried in an overhead of an fgMTN multiplex unit corresponding to an adjusted slot, the instruction information of the second instruction indicating the bandwidth adjustment acknowledge of the second node.

In an embodiment of the present disclosure, when there is a plurality of slots for which bandwidth needs to be adjusted, the instruction information of the second instruction is carried in the overhead of the fgMTN multiplex unit corresponding to each adjusted slot.

In an embodiment of the present disclosure, when an overhead of the second instruction is a third specific value, the instruction information of the second instruction indicates the bandwidth adjustment acknowledge of the second node.

In an embodiment of the present disclosure, the apparatus further includes:
a second sending module, configured to send a third fgMTN multiframe to the second node, the third fgMTN multiframe including a plurality of fgMTN multiplex units;
wherein instruction information of a third instruction (or referred to as a bandwidth adjustment commit instruction) is carried in overheads of first Q number of fgMTN multiplex units in the third fgMTN multiframe, the instruction information of the third instruction indicating the bandwidth adjustment commit to the second node, where Q is an integer greater than or equal to 1.

In an embodiment of the present disclosure, the apparatus further includes:
a second processing module, configured to carry the instruction information of the third instruction in the overheads of the first Q number of fgMTN multiplex units in the third fgMTN multiframe, when the first node is ready to switch to the new slot configurations.

In an embodiment of the present disclosure, when an overhead of the third instruction is a fourth specific value, the instruction information of the third instruction indicates the bandwidth adjustment commit to the second node.

In an embodiment of the present disclosure, the apparatus further includes:
a third processing module, configured to switch to the new slot configurations, starting from an fgMTN multiplex unit subsequent to the first Q number of fgMTN multiplex units, or starting from a first fgMTN multiplex unit of an fgMTN multiframe subsequent to the third fgMTN multiframe.

In an embodiment of the present disclosure, the apparatus further includes:
a second receiving module, configured to receive a fourth fgMTN multiframe from the second node, the fourth fgMTN multiframe including a plurality of fgMTN multiplex units;
wherein instruction information of a fourth instruction (or referred to as a bandwidth increase notification instruction) is carried in an overhead of an fgMTN multiplex unit corresponding to a slot with a smallest slot number among a plurality of slots for which bandwidth needs to be adjusted (e.g., bandwidth needs to be increased), the instruction information of the fourth instruction indicating a notification for the first node to increase bandwidth.

In an embodiment of the present disclosure, when an overhead of the fourth instruction is a fifth specific value, the instruction information of the fourth instruction indicates the notification for the first node to increase bandwidth.

The apparatus provided in the embodiment of the present disclosure can implement various processes implemented by the method embodiment shown in FIG. 1 and achieve the same technical effect. To avoid repetition, details are not described herein again.

Referring to FIG. 7, an embodiment of the present disclosure provides a transmission apparatus, applied to a second node. The apparatus 700 includes:
a third receiving module 701, configured to receive a first fgMTN multiframe, the first fgMTN multiframe including a plurality of fgMTN multiplex units, the fgMTN multiplex unit including an overhead multiframe indicator and client identification information, a value of the overhead multiframe indicator being m, and the client identification information carrying a client ID corresponding to an (m+1)-th slot, where m is an integer greater than or equal to 0 and less than or equal to N, and N is an integer.

In an embodiment of the present disclosure, instruction information of a first instruction is carried in an overhead of an fgMTN multiplex unit corresponding to a slot for which bandwidth needs to be adjusted, the instruction information of the first instruction being used to indicate a bandwidth adjustment request to the second node.

It should be noted that the slot for which bandwidth needs to be adjusted includes a slot whose occupancy needs to be removed or a slot for which bandwidth needs to be increased and adjusted.

In an embodiment of the present disclosure, when there is a plurality of slots for which bandwidth needs to be adjusted, the instruction information of the first instruction is carried in the overhead of the fgMTN multiplex unit corresponding to each adjusted slot.

In an embodiment of the present disclosure, when an overhead of the first instruction is a first specific value, the instruction information of the first instruction indicates the bandwidth adjustment request to the second node.

In an embodiment of the present disclosure, starting from the first fgMTN multiframe, which is the same fgMTN multiframe corresponding to the instruction information of the first instruction, the client identification information in the overhead of the fgMTN multiplex unit carries a new client ID for adjustment.

In an embodiment of the present disclosure, in a case where occupancy of a slot needs to be removed due to bandwidth reduction, a client ID carried in the client identification information in the overhead of an fgMTN multiplex unit corresponding to the removed slot is a second specific value.

In an embodiment of the present disclosure, the apparatus further includes:
a third processing module, configured to send a second fgMTN multiframe to the first node, the second fgMTN multiframe including a plurality of fgMTN multiplex units;
wherein instruction information of a second instruction is carried in an overhead of an fgMTN multiplex unit corresponding to an adjusted slot, the instruction information of the second instruction indicating the bandwidth adjustment acknowledge of the second node.

In an embodiment of the present disclosure, the apparatus further includes:
a fourth processing module, configured to carry the instruction information of the second instruction in the overhead of the fgMTN multiplex unit corresponding to the adjusted slot, when the second node is ready to switch to the new slot configurations.

In an embodiment of the present disclosure, when there is a plurality of slots for which bandwidth needs to be adjusted, the instruction information of the second instruction is carried in the overhead of the fgMTN multiplex unit corresponding to each adjusted slot.

In an embodiment of the present disclosure, when an overhead of the second instruction is a third specific value, the instruction information of the second instruction indicates the bandwidth adjustment acknowledge of the second node.

In an embodiment of the present disclosure, the apparatus further includes:
a third receiving module, configured to receive a third fgMTN multiframe from the first node, the third fgMTN multiframe including a plurality of fgMTN multiplex units;
wherein instruction information of a third instruction is carried in overheads of first Q number of fgMTN multiplex units in the third fgMTN multiframe, the instruction information of the third instruction indicating the bandwidth adjustment commit to the second node, where Q is an integer greater than or equal to 1.

In an embodiment of the present disclosure, the apparatus further includes:
a fifth processing module, configured to switch to the new slot configurations, starting from a first fgMTN multiplex unit of an fgMTN multiframe subsequent to the third fgMTN multiframe, when the second node receives at least one piece of instruction information of the third instruction.

In an embodiment of the present disclosure, when an overhead of the third instruction is a fourth specific value, the instruction information of the third instruction indicates the bandwidth adjustment commit to the second node.

The apparatus provided in the embodiment of the present disclosure can implement various processes implemented by the method embodiment shown in FIG. 4 and achieve the same technical effect. To avoid repetition, details are not described herein again.

As shown in FIG. 8, an embodiment of the present disclosure further provides a node device 800, including a processor 801, a memory 802, and a program or instructions stored on the memory 802 and executable on the processor 801. When the program or instructions are executed by the processor 801, the various processes of the method embodiments of FIG. 1 or FIG. 2 are implemented.

An embodiment of the present disclosure further provides a readable storage medium, having a program or instructions stored thereon. The program or instructions, when executed by a processor, implement the various processes of the method embodiments shown in FIG. 1 or FIG. 2.

The processor may be the processor in the terminal (or node) described in the above embodiments. The readable storage medium includes a computer-readable storage medium, such as a computer Read-Only Memory (ROM), a Random Access Memory (RAM), a magnetic disk, or an optical disk.

The steps of the method or algorithm described in connection with the disclosure of the present disclosure may be implemented by hardware, or may be implemented by a processor executing software instructions. Software instructions may consist of corresponding software modules, which can be stored in RAM, flash memory, ROM, Erasable Programmable Read-Only Memory (EPROM), Electrically Erasable Programmable Read-Only Memory (EEPROM), registers, a hard disk, a mobile hard disk, a CD-ROM, or any other form of storage medium well known in the art. An exemplary storage medium is coupled to the processor, such that the processor can read information from the storage medium and write information to the storage medium. Of course, the storage medium may be a component of the processor. The processor and the storage medium may be carried in an Application Specific Integrated Circuit (ASIC). In addition, the ASIC may be carried in a core network interface device. Of course, the processor and the storage medium may also exist as discrete components in the core network interface device.

Those skilled in the art should realize that in one or more of the above examples, the functions described in the present disclosure can be implemented by hardware, software, firmware, or any combination thereof. When implemented using software, these functions may be stored in a computer-readable medium or transmitted as one or more instructions or codes on a computer-readable medium. The computer-readable medium includes a computer storage medium and a communication medium, wherein the communication medium includes any medium that facilitates the transmission of a computer program from one place to another. The storage medium may be any available medium accessible by a general-purpose or special-purpose computer.

The specific embodiments described above further illustrate the objectives, technical solutions, and beneficial effects of the present disclosure. It should be understood that the above descriptions are only specific embodiments of the present disclosure and are not intended to limit the protection scope of the present disclosure. Any modifications, equivalent substitutions, improvements, etc., made on the basis of the technical solutions of the present disclosure shall be included within the protection scope of the present disclosure.

Those skilled in the art should understand that the embodiments of the present disclosure may be provided as a method, a system, or a computer program product. Therefore, the embodiments of the present disclosure may take the form of an entirely hardware embodiment, an entirely software embodiment, or an embodiment combining software and hardware aspects. Moreover, the embodiments of the present disclosure may take the form of a computer program product implemented on one or more computer-usable storage media (including but not limited to disk memory, Compact Disc Read-Only Memory (CD-ROM), optical memory, etc.) containing computer-usable program code.

The embodiments of the present disclosure are described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general-purpose computer, a special-purpose computer, an embedded processor, or other programmable data processing equipment to produce a machine, such that the instructions executed by the processor of the computer or other programmable data processing equipment produce a means for implementing functions specified in one or more flows of the flowcharts and/or one or more blocks of the block diagrams.

These computer program instructions may also be stored in a computer-readable memory that can guide a computer or other programmable data processing equipment to work in a specific manner, such that the instructions stored in the computer-readable memory produce an article of manufacture including an instruction device, and the instruction device implements the functions specified in one or more flows of the flowcharts and/or one or more blocks of the block diagrams.

These computer program instructions may also be loaded onto a computer or other programmable data processing equipment, such that a series of operation steps are executed on the computer or other programmable equipment to produce computer-implemented processing, whereby the instructions executed on the computer or other programmable equipment provide steps for implementing the functions specified in one or more flows of the flowcharts and/or one or more blocks of the block diagrams.

Obviously, those skilled in the art can make various modifications and variations to the embodiments of the present disclosure without departing from the spirit and scope of the present disclosure. In this way, if these modifications and variations of the embodiments of the present disclosure fall within the scope of the claims and their equivalent technologies of the present disclosure, the present disclosure is also intended to include these modifications and variations.

## Claims

1. A transmission method, applied to a first node, comprising:
sending a first fine grain metro transport network fgMTN multiframe, the first fgMTN multiframe comprising a plurality of fgMTN multiplex units;
wherein an overhead of each of the plurality of fgMTN multiplex units comprises an overhead multiframe indicator and client identification information, a value of the overhead multiframe indicator is m, and the client identification information carries a client identifier ID corresponding to an (m+1)-th slot, where m is an integer greater than or equal to 0 and less than or equal to N, and N is an integer.

2. The method according to claim 1, wherein instruction information of a first instruction is carried in an overhead of an fgMTN multiplex unit corresponding to a slot for which bandwidth needs to be adjusted, the instruction information of the first instruction being used to indicate a bandwidth adjustment request to a second node.

3. The method according to claim 2, further comprising:
carrying the instruction information of the first instruction in the overhead of the fgMTN multiplex unit corresponding to the adjusted slot, when the first node prepares to start bandwidth adjustment.

4. The method according to claim 2, wherein when there is a plurality of slots for which bandwidth needs to be adjusted, the instruction information of the first instruction is carried in the overhead of the fgMTN multiplex unit corresponding to each adjusted slot.

5. The method according to claim 2 or 3 or 4, wherein when an overhead of the first instruction is a first specific value, the instruction information of the first instruction indicates the bandwidth adjustment request to the second node.

6. The method according to claim 2, wherein starting from the first fgMTN multiframe, which is the same fgMTN multiframe corresponding to the instruction information of the first instruction, the client identification information in the overhead of the fgMTN multiplex unit carries the new client ID for adjustment.

7. The method according to claim 2, wherein the client ID of the client identification information in the overhead of an fgMTN multiplex unit corresponding to the removed slot is a second specific value.

8. The method according to claim 1, further comprising:
receiving a second fgMTN multiframe sent by a second node, the second fgMTN multiframe comprising a plurality of fgMTN multiplex units;
wherein instruction information of a second instruction is carried in an overhead of an fgMTN multiplex unit corresponding to an adjusted slot, the instruction information of the second instruction indicating the bandwidth adjustment acknowledge of the second node.

9. The method according to claim 8, wherein when there is a plurality of slots for which bandwidth needs to be adjusted, the instruction information of the second instruction is carried in the overhead of the fgMTN multiplex unit corresponding to each adjusted slot.

10. The method according to claim 8 or 9, wherein when an overhead of the second instruction is a third specific value, the instruction information of the second instruction indicates the bandwidth adjustment acknowledge of the second node.

11. The method according to claim 1, further comprising:
sending a third fgMTN multiframe to a second node, the third fgMTN multiframe comprising a plurality of fgMTN multiplex units;
wherein instruction information of a third instruction is carried in overheads of first Q number of fgMTN multiplex units in the third fgMTN multiframe, the instruction information of the third instruction indicating the bandwidth adjustment commit to the second node, where Q is an integer greater than or equal to 1.

12. The method according to claim 11, further comprising:
carrying the instruction information of the third instruction in the overheads of the first Q number of fgMTN multiplex units in the third fgMTN multiframe, when the first node is ready to switch to the new slot configurations.

13. The method according to claim 11 or 12, wherein when an overhead of the third instruction is a fourth specific value, the instruction information of the third instruction indicates the bandwidth adjustment commit to the second node.

14. The method according to claim 11, further comprising:
switching to the new slot configurations, starting from an fgMTN multiplex unit subsequent to the first Q number of fgMTN multiplex units, or starting from a first fgMTN multiplex unit of an fgMTN multiframe subsequent to the third fgMTN multiframe.

15. The method according to claim 1, further comprising:
receiving a fourth fgMTN multiframe from a second node, the fourth fgMTN multiframe comprising a plurality of fgMTN multiplex units;
wherein instruction information of a fourth instruction is carried in an overhead of an fgMTN multiplex unit corresponding to the slot with the smallest number among all the slots for which bandwidth needs to be adjusted, the instruction information of the fourth instruction indicating a notification for the first node to increase bandwidth.

16. The method according to claim 15, wherein when an overhead of the fourth instruction is a fifth specific value, the instruction information of the fourth instruction indicates the notification for the first node to increase bandwidth.

17. A transmission method, applied to a second node, comprising:
receiving a first fine grain metro transport network fgMTN multiframe, the first fgMTN multiframe comprising a plurality of fgMTN multiplex units;
wherein an overhead of each of the plurality of fgMTN multiplex units comprises an overhead multiframe indicator and client identification information, a value of the overhead multiframe indicator is m, and the client identification information carries a client identifier ID corresponding to an (m+1)-th slot, where m is an integer greater than or equal to 0 and less than or equal to N, and N is an integer.

18. The method according to claim 17, wherein instruction information of a first instruction is carried in an overhead of an fgMTN multiplex unit corresponding to a slot for which bandwidth needs to be adjusted, the instruction information of the first instruction being used to indicate a bandwidth adjustment request to a second node.

19. The method according to claim 18, wherein when there is a plurality of slots for which bandwidth needs to be adjusted, the instruction information of the first instruction is carried in the overhead of the fgMTN multiplex unit corresponding to each adjusted slot.

20. The method according to claim 18, wherein when an overhead of the first instruction is a first specific value, the instruction information of the first instruction indicates the bandwidth adjustment request to a second node.

21. The method according to claim 18, wherein starting from the first fgMTN multiframe, which is the same fgMTN multiframe corresponding to the instruction information of the first instruction, the client identification information in the overhead of the fgMTN multiplex unit carries the new client ID for adjustment.

22. The method according to claim 18, wherein the client ID of the client identification information in the overhead of an fgMTN multiplex unit corresponding to the removed slot is a second specific value.

23. The method according to claim 17, further comprising:
sending a second fgMTN multiframe to a first node, the second fgMTN multiframe comprising a plurality of fgMTN multiplex units;
wherein instruction information of a second instruction is carried in an overhead of an fgMTN multiplex unit corresponding to an adjusted slot, the instruction information of the second instruction indicating the bandwidth adjustment acknowledge of the second node.

24. The method according to claim 23, further comprising:
carrying the instruction information of the second instruction in the overhead of the fgMTN multiplex unit corresponding to the adjusted slot, when the second node is ready to switch to the new slot configurations.

25. The method according to claim 23, wherein when there is a plurality of slots for which bandwidth needs to be adjusted, the instruction information of the second instruction is carried in the overhead of the fgMTN multiplex unit corresponding to each adjusted slot.

26. The method according to claim 23 or 24 or 25, wherein when an overhead of the second instruction is a third specific value, the instruction information of the second instruction indicates the bandwidth adjustment acknowledge of the second node.

27. The method according to claim 17, further comprising:
receiving a third fgMTN multiframe from a first node, the third fgMTN multiframe comprising a plurality of fgMTN multiplex units;
wherein instruction information of a third instruction is carried in overheads of first Q number of fgMTN multiplex units in the third fgMTN multiframe, the instruction information of the third instruction indicating the bandwidth adjustment commit to the second node, where Q is an integer greater than or equal to 1.

28. The method according to claim 27, wherein the second node switches to the new slot configurations, starting from a first fgMTN multiplex unit of an fgMTN multiframe subsequent to the third fgMTN multiframe, when the second node receives at least one piece of instruction information of the third instruction.

29. The method according to claim 27 or 28, wherein when an overhead of the third instruction is a third specific value, the instruction information of the third instruction indicates the bandwidth adjustment commit to the second node.

30. A transmission apparatus, applied to a first node, comprising:
a first sending module, configured to send a first fine grain metro transport network fgMTN multiframe to a second node, the first fgMTN multiframe comprising a plurality of fgMTN multiplex units;
wherein an overhead of each of the plurality of fgMTN multiplex units comprises an overhead multiframe indicator and client identification information, a value of the overhead multiframe indicator is m, and the client identification information carries a client identifier ID corresponding to an (m+1)-th slot, where m is an integer greater than or equal to 0 and less than or equal to N, and N is an integer.

31. A transmission apparatus, applied to a second node, comprising:
a third receiving module, configured to receive a first fine grain metro transport network fgMTN multiframe, the first fgMTN multiframe comprising a plurality of fgMTN multiplex units;
wherein an overhead of each of the plurality of fgMTN multiplex units comprises an overhead multiframe indicator and client identification information, a value of the overhead multiframe indicator is m, and the client identification information carries a client identifier ID corresponding to an (m+1)-th slot, where m is an integer greater than or equal to 0 and less than or equal to N, and N is an integer.

32. A node device, comprising a processor, a memory, and a program or instructions stored on the memory and executable on the processor, wherein the program or instructions, when executed by the processor, implement the steps of the method according to any one of claims 1 to 29.

33. A readable storage medium, having a program or instructions stored thereon, wherein the program or instructions, when executed by a processor, implement the steps of the method according to any one of claims 1 to 29.
